Europäisches Patentamt

European Patent Office

Office européen des brevets

(11) Publication number : **0 570 213 A2**

# EUROPEAN PATENT APPLICATION

(21) Application number : 93303682.4

(22) Date of filing : 12.05.93

(51) Int. Cl.⁵ : **C08G 63/91,** C08G 63/52, C08G 63/54, C08L 67/06

(30) Priority : 15.05.92 GB 9210397

(43) Date of publication of application :
18.11.93 Bulletin 93/46

(84) Designated Contracting States :
**BE CH DE ES FR GB IT LI NL**

(71) Applicant : **SCOTT BADER COMPANY LIMITED**
**Wollaston**
**Wellingborough Northamptonshire NN9 7RL**
**(GB)**

(72) Inventor : **Layton, John Michael**
**The Ash, Newtown Road**
**Raunds, Northampstonshire (GB)**
Inventor : **Panther, Richard Austin**
**13 Brampton Close, Barton Seagrave**
**Kettering, Northamptonshire (GB)**

(74) Representative : **Coleiro, Raymond et al**
**MEWBURN ELLIS 2 Cursitor Street**
**London EC4A 1BQ (GB)**

(54) **Terminally modified unsaturated polyester resins.**

(57)    An ethylenically unsaturated polyester has, as at least a number of terminal groups, $C_{1-4}$ alkyl-carboxyl-$C_{1-3}$ alkyl-carboxyl groups, especially acetoacetate groups.

It can be prepared by reaction of terminal hydroxyl groups of a polyester with a $C_{1-6}$ alkyl ester of a $C_{1-4}$ alkyl-carboxyl-$C_{1-3}$ alkyl-carboxylic acid, and can be blended with an ethylenically unsaturated monomer to provide a composition curable by free radical polymerization in the presence of an accelerator, especially cobalt octoate.

EP 0 570 213 A2

This invention relates to terminally modified unsaturated polyester resins.

For the production of high solid surface coating compositions containing <u>saturated</u> polyester resins Eastman Kodak recommend reaction of the hydroxy end groups of such polyester resins with tertiary butyl acetoacetate (t-BAA). The reaction has been found to lower the viscosity, enabling coatings of workable viscosities to be formulated containing much reduced levels of diluent, and hence considerably lower volatile organic content (VOC) values. In their publication No. N-328 Eastman Kodak describe the benefits of the acetoacetyl end groups in crosslinking with melamine and isocyanate containing systems. However, those seeking the benefits of acetoacetyl chemistry for thermoset coatings containing <u>unsaturated</u> polymers are directed to publications N-319 and N-322 both of which describe the use of acetoacetoxyethyl methacrylate (AAEM) as an <u>unsaturated</u> crosslinking monomer.

EP-A-0457276 (Caramaschi et al) describes the use of AAEM in an unsaturated polyester composition as an accelerator. During cure the monomer crosslinks to form part of the solid matrix. This is differentiated from US-A-3574787 which discloses the use of (saturated) acetoacetic esters as additional accelerators in unsaturated polyester systems. We believe that both types of materials behave as accelerators by forming chelate compounds with components in the crosslinking composition such as the cobalt compounds and/or other additives. In any event such acetoacetic esters cannot become incorporated within the resin/monomer matrix because they are incapable of crosslinking.

Surprisingly, we have found that reaction of an unsaturated polyester resin with a $C_{1-4}$ alkyl-carbonyl-$C_{1-3}$ alkyl-carboxyl group such as an acetoacetate can provide much wanted enhancement of acceleration of its cure.

Thus, the invention provides, according to one aspect, an ethylenically unsaturated polyester having, as at least a number of terminal groups, $C_{1-4}$ alkyl-Carbonyl-$C_{1-3}$ alkyl-carboxyl groups, especially acetoacetate groups.

According to another aspect the invention provides a process for preparing such a polyester, which process comprises reacting an ethylenically unsaturated polyester having terminal hydroxy groups with a $C_{1-6}$ alkyl ester, especially a tertiary alkyl, more especially a tertiary butyl, ester of a $C_{1-4}$ alkyl-carbonyl-$C_{1-3}$ alkyl carboxylic acid, especially such an ester of acetoacetic acid, more especially tertiary butyl acetoacetate (t-BAA).

Thus, we find it especially surprising that when t-BAA is used to react wholly or partially with the hydroxy end groups of an unsaturated polyester the efficiency of the acetoacetyl group is maintained with respect to accelerator enhancement activity even though it is attached to a much longer less mobile molecule, i.e. the unsaturated polyester chain. When used in conjunction with a given level of conventional free radical catalyst in a metal soap cure system, not only is the setting time reduced, but the rate of through cure, i.e. hardening, is increased.

This confers the following benefits. At one extreme, the level of metal soap accelerator is reduced until the same setting time is achieved as with an unmodified unsaturated polyester. Such accelerators are usually intensely coloured; e.g. cobalt octoate is purple. Thus when addition levels of these materials are significantly reduced, so is the colour of the fully cured polyester. This has great potential benefit for the production of casting resins, where the resin ideally is water white when cured so as to show off an encapsulated specimen or artifact. A pale fully cured base resin is highly desirable in pigmented formulations when whites or pale hues are required.

Conventional metal soap accelerators can be expensive, and cobalt which is commonly used as the metal ion is often in short supply. Therefore any reduction in the dependence on such accelerators is beneficial.

At the other extreme, when metal soap accelerator levels are maintained and a much faster setting time and through cure results, advantages also accrue. Resins of low unsaturation level can have their apparent reactivity increased so that they set and cure in a more acceptable timespan.

An increase in the speed of through cure can reduce backup times in the case of gel coat formulations or in-mould coatings. In other words, a considerable reduction can be achieved in the time taken for a gel to be formed which is resistant to undue penetration of reinforcement fibres or monomer into the film.

Practically, most often, a combination of reduced metal soap accelerator level and increased reactivity will be sought, neither possibility being exploited to the extreme. This again has benefits for pale gel coats and makes possible the development of colour-matched bodystopper type repair compounds where holes, dents, deep stone chips or scratches need to be filled on automobiles; or repairs made to imperfect or damaged GRP mouldings; or surface defects put right in GRP boats and yachts, perhaps resulting from osmotic blistering or accidental damage. To date, in order to achieve fast through cure, amine accelerators needed to be used. However, they are not UV stable and darken with age; hence whites and pale shades have not been possible.

Although apparently not universally so, we have found that certain unsaturated polyesters that have been end-capped with acetoacetyl groups may be less subject to setting-time drift than unmodified equivalent resins. This is commercially valuable since resins may be used many months after manufacture and their performance is required still to be within the manufactured specification.

In addition to the properties already listed, those attributed to saturated polyester surface coatings also apply, namely for a given solids content, the viscosity of the end capped resin is lower than that of the unmodified material. This enables the production of manageable high solids resin formulations which for unsaturated polyesters involves use of a lower level of volatile monomer e.g. styrene. The smaller the amount of such monomers present, then the lower the level of monomer vapour that may be expected in the air above the wet resin during open mould processing i.e. whilst being worked or during the cure process. Such environmental considerations are becoming ever more important to the resin formulator.

The unsaturated polyester prior to modification with the abovementioned ester, especially acetoacetyl, groups may be derived from at least one unsaturated dicarboxylic acid or reactive derivative thereof and at least one glycol and may be made from the following typical components:

a) at least one unsaturated dicarboxylic acid or reactive derivative thereof, especially the anhydride, examples of which include maleic anhydride, fumaric acid and itaconic acid; optionally

b) at least one saturated polycarboxylic acid, especially a di- or tri-carboxylic acid or anhydride, examples of which include phthalic anhydride, isophthalic acid, terephthalic acid, tetrachlorophthalic anhydride, tetrabromophthalic anhydride, trimellitic anhydride, succinic acid, adipic acid, azelaic acid, sebacic acid, chlorendic acid and chlorendic anhydride; and

c) at least one polyol, especially a diol or triol, examples of which include ethylene glycol, 1,3-propylene glycol, 1,2-propylene glycol, 1,3-butane diol, 1,4-butane diol, 1,5-pentane diol, 2-butyl-2-ethyl-1,3-propane diol, hydroxypivalyl hydroxypivalate, 2-methyl-1,3-propane diol, diethylene glycol, dipropylene glycol, neopentyl glycol, dibromoneopentyl glycol, hydrogenated bisphenol A, alkylene oxide condensates of bisphenol A, 1,4-cyclohexanedimethanol, 2,2,4-trimethylpentanediol, trimethylol propane; and optionally

d) at least one additional modifying agent, for example, dicyclopentadiene;

and has typically

a) an acid value within the range 5 to 100, preferably from 10 to 80, and most preferably from 10 to 60, mg KOH/g;

b) a hydroxyl value within the range 5 to 100, preferably from 10 to 80, and most preferably from 10 to 60, mg KOH/g; and

c) a number average molecular weight ($\overline{Mn}$) of from about 400-500 to 20,000, preferably from about 500-600 to 10,000 and most preferably from about 700-800 to 5,000.

The choice of polyol component allows optimization of flexibility at reasonable cost, this being best achieved using a mixture of glycols such as propylene/ethylene/diethylene glycols or propylene glycol/neopentyl or diethylene glycol.

The molecular weight is chosen, for example, according to the desired melt viscosity, which increases with increasing molecular weight. In the final product the number average molecular weight ($\overline{Mn}$) may be from about 500 to 20,000 preferably from about 600 to 10,000, most preferably from about 800 to 5,000.

Modification of the unsaturated polyester (hereinafter referred to as "acetoacetylation") may be carried out by reaction thereof with a $C_{1-6}$ alkyl, especially tertiary alkyl, more especially tertiary butyl, ester of a $C_{1-4}$ alkyl-carbonyl-$C_{1-3}$ alkyl-carboxylic acid, especially of acetoacetic acid, which reaction is carried out prior to blending with an ethylenically unsaturated monomer. The optimum reaction temperature may vary from one polyester to another. However, a temperature for reaction is preferably chosen within the range 100-220°C, preferably 140-200°C, more preferably 150-190°C, typically 160-185°C, especially about 180°C. Thus, at temperatures below 100°C, the reaction medium is generally too viscous, while above 220°C, polymer degradation tends to occur. The reaction time is generally from about ½ to about 3 hrs, preferably ¾-2½ hrs, especially 1-2 hrs.

The reactant, such as t-BAA, may be added either continuously or in small aliquots over a period of a few hours and the by-product removed by conventional distillation. After allowing a reasonable time for reaction to take place after the final addition of reactant, tertiary butanol remaining in the product can be removed by the application of vacuum.

The reaction will result in a slight loss in acid value due to "dilution", the acetoacetate groups being of higher molecular weight than that of the hydroxyl groups they replace. Thus, the acid value of the modified unsaturated polyester may be from about 5 to 90, preferably from about 10 to 70, most preferably from about 10 to 50, mg KOH/g.

The hydroxyl groups of the unmodified polyester may be partially or totally replaced during the modification. The greater is the degree of acetoacetylation, then the more rapid are the setting and curing times. However, if desired, it may be possible to include within the composition an inhibitor which extends the setting time without necessarily lengthening the cure time. Thus, for some end uses, an exceedingly rapid setting time is not desirable, whereas for other uses this may be desirable. For example, for some uses, although rapid cure is desirable it may also be desirable for the composition to remain in a tacky state for some time before the onset of cure. However, by both control of the degree of acetoacetylation and selection of a particular inhibitor the setting and cure times can be controlled, possibly at least to some extent independently of one another, at will. Usually it is preferred that at least 20% of the hydroxyl groups are replaced but, depending on the desired setting time, from 40% up to 100% of the hydroxyl groups may, for example, be replaced. For the more rapid setting and cure times, preferably at least 50%, more preferably at least 80%, especially essentially 100% are replaced. Thus, the modified product may have a hydroxyl value of essentially zero up to about 60mg KOH/g and, as the desired rate of cure increases, preferably no more than about 40mg KOH/g, more preferably no more than about 20mg KOH/g.

The modified resin may be blended with an ethylenically unsaturated monomer, such as a vinyl monomer, to provide, according to another aspect of the invention, a free radical curing, thermosetting setting resin composition comprising the modified unsaturated polyester and the ethylenically unsaturated monomer.

Typically, such a composition has a polyester solid content in the range 40-90%, usually 50-80%, more usually 55-75%, especially 60-70% by weight of the total weight of polyester and unsaturated monomer. Especially with total acetoacetylation it may be possible to attain a solids content of up to 85-90%.

Examples of the ethylenically unsaturated monomer include styrene, chlorostyrene, bromostyrene, alpha-methyl styrene, vinyl toluene, diallyl orthophthalate, mono, di or polyfunctional (meth)acrylates such as methyl (meth)acrylate (i.e. methyl acrylate or methyl methacrylate), ethylene or butylene di(meth)acrylate, trimethylol propane di(meth)acrylate, dicyclopentenyl (meth)acrylate and acetoacetoxyethyl (meth)acrylate or combinations thereof (usually having styrene as one component).

Conveniently, the ethylenically unsaturated monomer may be blended with the modified unsaturated polyester immediately after preparation of the modified polyester whilst it is still hot.

Finally, the modified resin may, for example, include additionally at least one of an inhibitor, UV stabilizer, thixotrope, accelerator and filler.

Examples of the thixotrope are modified bentonite clay, hydrogenated castor oil and fumed silica, which latter is commercially available as Aerosil or Cabosil.

The amount of effective accelerator, for example cobalt metal in cobalt octoate, present may be from 0.0005 to 0.06 parts metal per 100 parts by weight styrenated resin. Thus, typically, when using a cobalt octoate solution containing 1% cobalt metal, then conventionally,

   a) a gel coat or general purpose laminating resin would typically need about 1 to 3 parts per 100 parts styrenated resin;

   b) a body filler resin or room temperature moulding application would typically need about 2-6 parts per 100 parts styrenated resin; and

   c) a casting or further resin would typically need about 0.2 to 2 parts per 100 parts of styrenated resin.

However, depending upon the required reaction, i.e. whether it is desired to maintain conventional gel times and hardening rates or to speed them up, a saving of between say 70% and 0% of the effective accelerator addition could be made. In some cases, where colour is a factor restraining the amount of cobalt that can be added, then more cobalt can be added as a result of colour reduction by acetoacetylation.

Thus, where a saving is desirable, then for the above applications (a)-(c), the % of cobalt metal, i.e. parts per 100 parts of styrenated resin, may be as little as about:

   for (a) 0.003-0.009%
   for (b) 0.006-0.019%
   for (c) 0.006-0.0019%.

The amount of filler present may be from essentially no filler at all up to about 90% by weight of the total weight of the composition in dependence upon its intended use. Thus, typical amounts for the following uses are:

   body stopper - about 50 to about 70%, especially about 60%
   resin concrete - about 60 to about 90%, especially about 90%
   filled laminate - 0 to about 20%, especially about 10-20%
   fire retardant - about 20 to about 50%.

Embodiments of the invention are now described in more detail with reference to the following Examples:

Example 1 Resin A was formulated as follows:

| Diethylene Glycol | 1.57 moles ] | |
| Propylene Glycol | 1.54 moles ] | 1st stage |
| Isophthalic Acid | 1.52 moles ] | |
| Maleic Anhydride | 1.51 moles | 2nd stage |

The resin was formulated to allow excess glycol for overhead loss during processing. Essentially the manufactured resin contained equal moles of all components. On completion of the reaction the resin was styrenated.

Example 2 Resin B:

A second batch of Resin A was prepared, then modified by adding the stoichiometric amount of t-butyl acetoacetate required to completely end cap all the terminal hydroxy end groups. The modification was carried out between 140 and 150°C, the addition being made over a period of 2 hours. Tertiary butanol, the by-product of the reaction, was distilled off; small amounts remaining at the end of the reaction were removed by vacuum.

Examples 3 and 4 Resin C was formulated as follows:

| Propylene Glycol | 0.60 moles ] | |
| Neopentyl Glycol | 2.39 moles ] | 1st stage |
| Isophthalic Acid | 1.20 moles ] | |
| Maleic Anhydride | 1.65 moles | 2nd stage |

The final glycol to acid mole ratio was formulated to be 1.0 to 1.0, with sufficient excess glycol in the starting mixture to compensate for subsequent loss of glycol during the reaction. This resin was split before styrenation. Half was styrenated (Example 3) to obtain Resin C, and the other half was end capped in the same manner as Resin B, then styrenated (Example 4). The modified resin became Resin D.

## TABLE 1

| Resin | A | B | C | D |
|---|---|---|---|---|
| Viscosity* (ps) | 9.5 | 6.3 | 10.1 | 9.9 |
| Setting time** at 25°C (mins) | 9.5 | 4.5 | 7.9 | 4.3 |
| Acid value (mg KOH/g) | 21 | - | 12.6 | - |
| Solid content % | 65 | 66 | 63 | 63 |

\*   Viscosities were measured using an ICI Cone and Plate Viscometer.

\*\*   Resins were cured using 2% of 50% strength methyl ethyl ketone peroxide, and 4% of 0.4% strength cobalt, cobalt octoate.

Table 1 clearly demonstrates the reduction in viscosity and setting time achieved with both modified resins B and D compared with their unmodified counterparts A and C.

Examples 5 and 6

Sprayable white gelcoat mixes were made to the following formulations:

| | Example 5 | Example 6 |
|---|---|---|
| Resin | 615.9 (Resin A) | 666.9 (Resin B) |
| Titanium Dioxide | 130.0 | 130.0 |
| Fumed Silica | 23.0 | 23.0 |
| Styrene | 226.0 | 176.0 |
| Anti UV agent | 2.5 | 2.5 |
| (2-hydroxy-4-methoxy benzophenone) | | |
| Cobalt Octoate (12% Co) | 1.4 | 0.9 |
| Potassium Octoate ( 8% K ) | 1.2 | 0.7 |
| | 1000.0 | 1000.0 |

The gelcoats had the following properties:

| | | Example 5 | Example 6 |
|---|---|---|---|
| Viscosity: Ferranti Shirley at 25°C | : 0.6s$^{-1}$ | 220 ps | 239 ps |
| | : 4500S$^{-1}$ | 1.8 ps | 1.5 ps |

Setting time at 25°C: 2% of 50% active MEKP 6.2 min 5.9 min

Note that a similar setting time and viscosity were obtained by the end capped Example 6 even though it contained less accelerators, less styrene and more resin than Example 5.

Examples 7 and 8

Both white gelcoats of Examples 5 and 6 were catalysed with 2% of 50% active MEKP and cast onto glass plates which had previously been treated with a wax release agent. The wet thickness of these films was nominally 0.6 mm. After curing for 3 hours, a laminate was made by laying 2 layers of chopped strand glass mat impregnated with a catalysed, unfilled, general purpose laminating resin onto the back of each film, then consolidating.

After full cure, the laminates were removed from the glass. The laminate of Example 8, in which the gelcoat of Example 6 was used, was seen to be cleaner and brighter than the laminate of Example 7, in which the gelcoat of Example 5 was used. This was confirmed by a colour measurement (ASTM D2244-85) with a Minolta CR 200 Chroma Meter.

| Example | Tristimulus values | | |
|---------|------|------|------|
| | L | a | b |
| 7 | 95.92 | 0.14 | 0.97 |
| 8 | 97.01 | -0.20 | 0.63 |

These values indicate that Example 7 was darker, redder and yellower than Example 8.

Example 9 - Effect of Partial and Complete Acetoacetylation

A resin of the following composition was made:

| | |
|---|---|
| Propylene Glycol | 2.06 moles |
| Diethylene Glycol | 0.16 moles |
| Ethylene Glycol | 1.03 moles |
| Phthalic Anhydride | 1.89 moles |
| Maleic Anhydride | 1.12 moles |

The reacted resin was designed to allow for a certain glycol loss during processing so that there was a final stoichiometric balance between hydroxyl and carboxyl groups. Reaction was terminated at a melt viscosity (ICI Cone and Plate Viscometer) of 4.8 poise at 125°C corresponding to an acid value of 53 mg KOH/g. Prior to styrenation the solid resin was split into three lots. Lot 1 was styrenated in the conventional manner, the rheology being adjusted to give a general purpose laminating resin by the addition of styrene and a small quantity of fumed silica.

Lot 2 was reacted with sufficient t-BAA at 140°C to acetoacetylate half of the available terminal hydroxyl groups. Lot 3 was reacted to convert all the hydroxyl groups. Both modified resins were styrenated and their viscosities adjusted to similar values as the unmodified resin.

A standard amount of inhibitor was used in each lot. The styrenated resin properties are shown in Table 2.

7

Table 2

| | | Unmodified | 50%AA | 100%AA |
|---|---|---|---|---|
| Setting time* at 25°C (mins) | | 8.5 | 3.9 | 2.5 |
| Viscosity Shirley Ferranti | 37.35s-1 (poise) | 4.9 | 4.8 | 4.9 |
| | 4.500s-1 (poise) | 2.7 | 2.5 | 2.5 |
| Solids Content % | | 60.7 | 62.1 | 61.4 |

*Resins were cured using 2% of 50% strength methyl ethyl ketone peroxide, and 4% of 0.4% strength cobalt, cobalt octoate.

Mechanical properties of the cured resins were tested. In order to have sufficient working life to prepare cast resin sheets, the catalyst contents were reduced from 2% to 1%. After activation, the resin casts were left at room temperature for 24 hours, then placed in an oven for 3 hours at 80°C, before cooling, cutting and testing. The properties of the cut sheets are shown in Table 3.

## Table 3

| Cast Sheet Properties | Unmodified | 50%AA | 100%AA |
|---|---|---|---|
| Tensile Modulus | 4.0GPa | 3.7GPa | 3.4GPa |
| Tensile Strength | 48.0MPa | 46.8MPa | 45.0MPa |
| Elongation to Break | 1.24% | 1.31% | 1.43% |
| Heat Deflection Temperature | 66.5°C | 58.5°C* | 50.7°C* |
| Water Absorption 1 Day (A) | 13.7mg | 13.8mg | 14.0mg |
| Water Absorption 1 Day (B) | 15.5mg | 15.5mg | 15.8mg |
| Water Absorption 7 Days (A) | 35.8mg | 36.1mg | 37.9mg |
| Water Absorption 7 Days (B) | 44.8mg | 45.7mg | 45.5mg |
| Barcol Hardness | 47±1 | 47±1 | 45±1 |

*On post curing, the samples cracked to some extent in a manner such that markings resembling sea shells or small fingernail ends appeared within the depth of the casting ("shell cracking"). This prevented measurement of heat deflection temperature (HDT) because the structurally flawed casting could not be sawn into strips for HDT testing. However, unaffected areas of the casting were still available which allowed measurement of the glass transition temperatures. Hence these values, determined on a Mettler Differential Scanning Colorimeter (DSC) from 0-200°C heating at 20°C/min, are quoted.

The above properties set out in Table 3 above were obtained as follow:
1) Tensile properties - BS 2782 Part 3 Method 320C equivalent to ISO R527.
2) Heat Deflection Temperature - BS 2782 Part 1 Method 1218 equivalent to ISO 75.
3) Water Absorption - BS 2782 Part 4 Method 430A and B equivalent to ISO 62 Methods 1 and 2.
4) Barcol Hardness - measured on a Barcol Hardness testing machine of Barber Coleman Co; Model No. GYZJ 934.1 to a scale on which glass measures 100.

A slight decline in tensile properties with the degree of acetoacetylation is mirrored by a modest but significant improvement in elongation. Heat deflection/glass transition temperatures reduce with acetoacetylation but both water absorption/extraction and Barcol Hardness appear unchanged.

Example 10 - Effect of Acetoacelytation Temperature

A stoichiometric amount of t-BAA was added to 2Kg aliquots of the same resin type as that used in Example 9 to acetoacetylate all the terminal carboxyl groups. Reactions were carried out at 100, 140, 180 and 220°C, and the amount of distillate measured; see Table 4.

If all the t-BAA reacted then some 93cc of t-butanol would have been distilled off.

Table 4

| Distillate | |
|---|---|
| 100°C | 38cc |
| 140°C | 102cc |
| 180°C | 100cc |
| 220°C | 127cc |

The modified resins were styrenated, then adjusted as before to a desired viscosity. Extra inhibitor was added to extend the setting time (to a period suitable for many commercial uses) for casting resin sheets using 2% catalyst addition. The resin properties are shown in Table 5.

Table 5

| Resin Properties | | Acetylation Temperature | | | |
|---|---|---|---|---|---|
| | | 100°C | 140°C | 180°C | 220°C |
| Viscosity ICI Cone and Plate at 25°C before adjustment (poise) | | 5.4 | 6.5 | 7.5 | 13.5 |
| Final Viscosity Shirley Ferranti | 37.35s-1 (poise) | 4.5 | 4.2 | 4.9 | 4.2 |
| | 4.500s-1 (poise) | 2.6 | 2.7 | 2.7 | 2.7 |
| Setting time before adjustment (mins) | | 2.8 | 3.6 | 4.1 | 3.6 |
| Setting time after adjustment (mins) | | 11.8 | 11.6 | 12.1 | 11.8 |
| Solids % | | 61.8 | 62.2 | 60.0 | 51.6 |
| Colour Lovibond 2000 Comparator Mk 2 P.R.S. Varnish Scales | | ⅝ | ¾ | 1 | 2½ |

It is clearly seen that reaction at 220°C has provided a very much more viscous product which needed to be reduced to a much lower solids content in order to achieve a workable viscosity. Reduced solids however have not diminished its reactivity. This suggests the onset of a degree of crosslinking. The large quantity of distillate, being considerably more than from a stoichiometric amount given by the reaction, and the increased colour indicates some degradation of the polyester.

The physical properties of the cast sheet are shown in Table 6.

Table 6

| Physical Properties Cast Sheet | Acetylation Temperature | | | |
|---|---|---|---|---|
| | 100°C | 140°C | 180°C | 220°C |
| Tensile Modulus | 2.7GPa | 3.1GPa | 3.3GPa | 3.7GPa |
| Tensile Strength | 49.2MPa | 43.5MPa | 42.3MPa | 47.9Mpa |
| Elongation to Break | 4.07% | 1.69% | 1.33% | 1.36% |
| Heat Deflection Temperature ∗Glass Transition Temperature | 54.8∗ | 55.4∗ | 53.8∗ | 60.0 |
| Water Absorption 1 day (A) | 15.1mg | 14.1mg | 13.0mg | 10.0mg |
| Water Absorption 1 day (B) | 21.3mg | 18.3mg | 16.4mg | 14.1mg |
| Water Absorption 7 days (A) | 39.7mg | 38.3mg | 35.1mg | 27.2mg |
| Water Absorption 7 days (B) | 58.3mg | 51.7mg | 43.0mg | 36.4mg |
| Barcol Hardness | 45 | 42 | 47 | 45 |
| Residuals t-HAA | 1.0% | 0.7% | Nil | Nil |
| Residuals t-butanol | 0.3% | 0.2% | Nil | Nil |

Residual volatiles were assessed by Gas Liquid Chromatography. In the presence of styrene the limits of detection were 0.5% for t-HAA and 0.1% for t-butanol.

Similar excellent results to the above have also been obtained using an orthophthalic version of the neopentyl glycol resin (resin C).

Tensile, especially elongation properties can be seen to be adversely affected by residual amounts of t-BAA and t-butanol. From the results in Tables 5 and 6 it can be seen that the optimum temperature for the acetoacetylation of the polyester modified by the reaction of this example lies above 140°C yet below 220°C.

**Claims**

1. An ethylenically unsaturated polyester having, as at least a number of terminal groups, $C_{1-4}$ alkyl-carbonyl-$C_{1-3}$ alkyl-carboxyl groups.

2. A polyester according to claim 1, wherein the $C_{1-4}$ alkyl-carbonyl-$C_{1-3}$ alkyl-carboxyl groups are acetoacetyl groups.

3. A polyester according to any preceding claim, which additionally contains terminal carboxyl groups.

4. A polyester according to any preceding claim, which additionally contains terminal hydroxyl groups.

5. A polyester according to any preceding claim, wherein the ethylenic unsaturation is provided by at least one of maleic, fumaric and itaconic acid units.

6. A polyester according to claim 5, which additionally contains acid units derived from at least one saturated polycarboxylic acid.

7. A polyester according to claim 6, wherein the polycarboxylic acid is isophthalic acid.

8. A polyester according to any preceding claim having a hydroxyl value of up to 60 mg KOH/g inclusive.

9. A polyester according to claim 8, wherein the acid value is from 10 to 70 mg KOH/mg inclusive.

**10.** A polyester according to claim 9, wherein the acid value is from 10 to 50 mg KOH/mg inclusive.

**11.** A polyester according to any preceding claim having a molecular weight ($\overline{Mn}$) of from 500 to 20,000 inclusive.

**12.** A polyester according to claim 11, wherein the molecular weight ($\overline{Mn}$) is from 600 to 10,000 inclusive.

**13.** A polyester according to claim 12, wherein the molecular weight ($\overline{Mn}$) of the polyester is from 800 to 5,000 inclusive.

**14.** A process for preparing an ethylenically unsaturated polyester having, as at least a number of terminal groups, $C_{1-4}$ alkyl-carbonyl-$C_{1-3}$ alkyl-carboxyl groups, which process comprises reacting an ethylenically unsaturated polyester starting material having terminal hydroxy groups with a $C_{1-6}$ alkyl ester of a $C_{1-4}$ alkyl-carbonyl-$C_{1-3}$ alkyl-carboxylic acid.

**15.** A process according to claim 14, wherein the said ester is a $C_{1-6}$ alkyl acetoacetate.

**16.** A process according to claim 15, wherein the $C_{1-6}$ alkyl acetoacetate is a tertiary $C_{1-6}$ alkyl acetoacetate.

**17.** A process according to claim 16, wherein the tertiary $C_{1-6}$ alkyl acetoacetate is tertiary-butyl acetoacetate.

**18.** A process according to any one of claims 14 to 17, which is carried out at a temperature of from 100 to 220°C inclusive.

**19.** A process according to claim 18, which is carried out at a temperature of from 140 to 200°C inclusive.

**20.** A process according to any one of claims 14 to 19, wherein at least 20% of the terminal hydroxyl groups of the said polyester starting material are reacted with the said alkyl ester of the carboxylic acid.

**21.** A free radical curable, thermosetting resin composition comprising
(a) an ethylenically unsaturated polyester having, as at least a number of terminal groups, $C_{1-4}$ alkyl-carbonyl-$C_{1-3}$ alkyl-carboxyl groups: and
(b) a copolymerisable ethylenically unsaturated monomer.

**22.** A composition according to claim 21, wherein the $C_{1-4}$ alkyl-carbonyl $C_{1-3}$ alkyl-carboxyl groups are acetoacetyl groups.

**23.** A composition according to claim 21 or 22, wherein the copolymerisable vinyl monomer is styrene.

**24.** A composition according to any one of claims 21 to 23, which contains, by weight of the total weight of the polyester and ethylenically unsaturated monomer, from 40 to 90 % of the polyester.

**25.** A composition according to claim 24, which contains, by weight of the total weight of the polyester and ethylenically unsaturated monomer, from 50 to 80% of the polyester.

**26.** A composition according to any one of claims 21 to 25, which additionally contains a filler.

**27.** A composition according to any one of claims 21 to 26, wherein the filler is present in an amount of up to 90 % inclusive by weight of the total weight of the composition.

**28.** A method of preparing a gel coat comprising admixing with a composition according to any one of claims 21 to 27 a free radical initiator and an accelerator comprising a cobalt compound.

**29.** A method according to claim 28, wherein the free radical initiator is methyl ethyl ketone peroxide.

**30.** A method according to claim 28 or 29, wherein the cobalt compound comprises cobalt octoate.